# EUROPÄISCHE PATENTSCHRIFT

(11) **EP 2 539 152 B1**
(45) Veröffentlichungstag und Bekanntmachung des Hinweises auf die Patenterteilung: **26.11.2014**
(21) Anmeldenummer: 11706223.2
(22) Anmeldetag: 25.02.2011
(51) Int. Cl.: B41J 2/46, B41J 2/47, B41J 2/44, B23K 26/08

(54) **MARKIERUNGSVORRICHTUNG UND VERFAHREN ZUM MARKIEREN VON WERT- ODER SICHERHEITSDOKUMENTEN UNTER VERWENDUNG VON LICHTLEITFASERN**
MARKING DEVICE AND METHOD FOR MARKING VALUABLE OR SECURITY DOCUMENTS USING OPTICAL FIBRES
DISPOSITIF DE MARQUAGE ET PROCÉDÉ DE MARQUAGE DE DOCUMENTS DE VALEUR OU DE SÉCURITÉ, À L'AIDE DE FIBRES OPTIQUES

(30) Priorität: 26.02.2010 DE 102010010071
(43) Veröffentlichungstag der Anmeldung: 02.01.2013
(73) Patentinhaber: Bundesdruckerei GmbH, 10969 Berlin (DE)
(72) Erfinder: BAUDACH, Steffen, 13189 Berlin (DE)
(74) Vertreter: Patentanwälte Bressel und Partner mbB
(86) Internationale Anmeldenummer: PCT/EP2011/052798
(87) Internationale Veröffentlichungsnummer: WO 2011/104329

(56) Entgegenhaltungen:
- WO-A2-2006/114600
- DE-A1- 19 955 383
- JP-A- 2009 172 629
- US-A- 3 881 098
- US-A- 4 926 348
- US-A1- 2006 027 538

## Beschreibung

Die Erfindung betrifft ein Verfahren zum Markieren von Wert- oder Sicherheitsdokumenten sowie eine Markierungsvorrichtung, die für ein dauerhaftes Markieren eines Wert- oder Sicherheitsdokuments mit Hilfe von Laserlicht ausgebildet sind.

Als Sicherheitsdokumente werden jene Dokumente und Gegenstände bezeichnet, die durch mindestens ein Sicherheitsmerkmal oder Sicherheitselement gegen eine Verfälschung und/oder ein unautorisiertes Kopieren geschützt sind. Sicherheitsdokumente, die einen Wert verkörpern, werden auch als Wertdokumente bezeichnet. Sicherheitsdokumente umfassen beispielsweise Ausweise, Führerscheine oder Kraftfahrzeugpapiere und Wertdokumente, wobei Wertdokumente, beispielsweise Banknoten, Postwertzeichen oder Schecks umfassen.

Zumindest bei einem Teil der Sicherheitsdokumente oder Wertdokumente ist es vorteilhaft, diese auch permanent, vorzugsweise individuell, markieren zu können. Aus dem Stand der Technik sind unterschiedliche Verfahren bekannt, mit denen Wert- und/oder Sicherheitsdokumente individualisiert markiert werden können. Während historisch die meisten Wert- und Sicherheitsdokumente auf Papierbasis hergestellt wurden und insbesondere mittels Drucktechniken individualisiert wurden, werden moderne Sicherheitsdokumente und Wertdokumente häufig zumindest teilweise aus Kunststoffmaterialien hergestellt. Moderne Personalausweise und Führerscheine werden beispielsweise als Laminationskörper aus mehreren Kunststoffschichten und gegebenenfalls einer oder mehrerer Papierschichten zusammengefügt.

Für die permanente individuelle Markierung von Kunststoffen sind im Stand der Technik so genannte Lasermarkierverfahren entwickelt worden. Hierfür wird den Kunststoffschichten, welche beispielsweise aus Polycarbonat bestehen, spezielle Pigmentstoffe zumindest in einzelnen Schichten, die später mit einem Laser markiert werden sollen, zugefügt. Diese beeinflussen eine Transparenz im optischen sichtbaren Bereich nicht oder für einen Nutzer nicht wahrnehmbar. Wird eine solche Schicht mit Laserlicht ausreichender Intensität bestrahlt, so tritt an den Pigmenten eine verstärkte Absorption des Laserlichts auf. Hierdurch ist es möglich, Energie in den Kunststoff einzukoppeln, welches anschließend über die hierbei deponierte Energiemenge zu einer lokalen Einfärbung, beispielsweise über eine Erwärmung und eine teilweise Carbonisierung des Kunststoffmaterials führt. Je nach eingebrachter Energiemenge lässt sich ein Schwärzungsgrad des Kunststoffs gezielt einstellen. Aus einzelnen lokalen Bildpunkten lassen sich Muster, insbesondere Graustufenbilder, Schriftzüge und andere Zeichen, dauerhaft in das Wert- oder Sicherheitsdokument markieren.

Aus der DE 100 11 486 A1 ist ein kartenförmiger Datenträger bekannt, bestehend aus mindestens einer Schicht, in die visuell lesbare Informationen in Form einer Änderung der optischen Eigenschaften aufgrund einer irreversibel durch einen Laserstrahl bewirkten Materialveränderung eingebracht sind, wobei das Absorptionsvermögen dieser Schicht für mindestens eine Wellenlänge in Folge der Laserstrahlung zumindest teilweise reduziert wird. Bei diesem Verfahren werden ursprüngliche farbige oder opake Schichten hinsichtlich Absorption "ausgebleicht".

Aus der DE 30 48 733 A1 sind eine Ausweiskarte und ein Verfahren zur Herstellung einer solchen Ausweiskarte mit aufgebrachten Informationen in Form von Mustern, beispielsweise Buchstaben, Zahlen und/oder Bildern, bekannt. Die Ausweiskarte weist auf mindestens einer Oberfläche unterschiedlich farbige, übereinander angeordnete Schichtenbereiche, die zumindest teilweise durch visuell erkennbare Personalisierungsdaten unterbrochen sind. Es ist vorgesehen, dass die Informationen durch Einwirkung eines gesteuerten Laserstrahls auf ein oder mehrere auf einem Kunststoffträger übereinander aufgebrachte Farbschichten dargestellt werden. Durch die Lasereinstrahlung lässt sich somit lokal die Farbe verändern.

Aus der DE 696 05 788 T2 ist ein Verfahren zur Herstellung eines Gegenstands mit einem farbigen Zeichen durch Bestrahlung der Oberfläche des Gegenstands mit Laserlicht in Form des Zeichens bekannt, wobei der Gegenstand in mindestens jenem Bereich, wo das Zeichen aufgebracht wird, aus einer Kunststoffzusammensetzung besteht, die mindestens drei farbbildende Komponenten enthält, die ihre farbbildende Fähigkeit unter dem Einfluss von Laserlicht verlieren, die derart gewählt und in einer solchen Konzentration vorhanden sind, dass bei jeder Wellenlänge zwischen 400 und 700 nm mindestens ein Teil der Menge des einfallenden Lichts absorbiert wird, für das Zeichen eine oder mehrere Farben gewählt werden, die Wellenlänge des Laserlichts in der Folge auf einen Wert festgesetzt wird, der von der gewählten Farbe abhängt, und die Oberfläche des Gegenstands danach mit dem Laserlicht bestrahlt wird.

Aus der WO 01/28778 A2 ist ein Verfahren zur Aufbringung von farbigen Zeichen auf einem Datenträger, vorzugsweise aus Kunststoff, mittels eines Lasersystems bekannt, wobei mindestens eine Oberflächenschicht und/oder oberflächennahen Schicht des Datenträgers eingebrachte latente Pigmente, bei denen durch energetische Anregung eine Änderung des Absorptionsverhaltens erfolgt, an den für das Zeichen vorgesehenen Stellen des Datenträgers durch Laserbestrahlung, die im IR- und/oder sichtbaren Bereich liegt, energetisch dergestalt angeregt werden, dass bei denselben Pigmenten ein Farbumschlag stattfindet und dass nach dem Farbumschlag der laserbestrahlten latenten Pigmente, die nicht durch Laserbestrahlung angeregten latenten Pigmente durch eine Bestrahlung mit Lichtwellen im UV-Wellenlängenbereich energetisch dergestalt angeregt werden, dass bei den so bestrahlten Pigmenten eine Farblosigkeit herbeigeführt wird.

Aus der DE 100 53 264 A1 ist ein Verfahren zum Einschreiben von Daten, insbesondere Personalisierungsdaten, auf und/oder in einen Datenträger mittels elektromagnetischer Strahlung bekannt, wobei bei dem Verfahren ein beliebiger Datenträger bereitgestellt wird, auf und/oder in welchem mindestens ein Farbmittel mindestens lokal vorgesehen wird, und dieses Farbmittel mittels der elektromagnetischen Strahlung von mindestens einen Wellenlängenbereich bestrahlt wird, so dass sich im Bereich der Bestrahlung eine Änderung der Farbe des Farbmittels durch Bleichen ergibt, wobei die Farbänderung maschinell und/oder durch ein menschliches Auge feststellbar ist. Hierdurch ergibt sich eine erhöhte Fälschungs- und Manipuliersicherheit für den Datenträger.

Aus der WO 2006/114600 A2 ist ein Substratmarkierungssystem bekannt, welches eine Substratmarkierungsvorrichtung und ein Substrat umfasst. Das Substrat umfasst Zusätze, welche geeignet sind, ihre Farbe bei Bestrahlung in eine von mindestens zwei auswählbaren Farben zu ändern. Die beiden auswählbaren Farben sind voneinander und, falls die Additive eine Farbe aufweisen, auch von dieser Farbe verschieden. Die Vorrichtung umfasst eine Laserdiode zum Abstrahlen eines Laserstrahls und Mittel zum Ausrichten des Laserstrahls auf einen gewünschten Punkt auf dem Substrat. Im Betrieb bestrahlt der Laserstrahl den gewünschten Punkt und verursacht hierüber, dass die Additive ihre Farbe an diesem Punkt ändern. Die Vorrichtung umfasst ferner Mittel zum Steuern der Fluenz des Laserstrahls an dem Punkt, sodass im Betrieb die sich ergebende Farbe der Additive aus den auswählbaren Farben ausgewählt werden kann.

Aus der US 4,926,348 ist ein Plottergerät zum Erzeugen einer Aufzeichnung auf einer photoempfindlichen Oberfläche bekannt. Das Plottergerät umfasst eine Kontaktspitze zum Berühren und zum Bewegen zwischen unterschiedlichen Positionen auf der Oberfläche, wobei die Kontaktspitze beim Betrieb eine Quelle elektromagnetischer Strahlung bildet, die an der Oberfläche angeordnet ist, wobei die Strahlungsquelle an der Spitze Punkte und/oder Linien des Kontakts der Spitze mit der Oberfläche bestrahlt. Die Kontaktspitze weist eine Strahlungsapertur eines vorgegebenen Durchmessers auf, um Linien mit einer Breite des Durchmessers zu beleuchten. Eine optische Faser eines benötigten Durchmessers kann sich von einer elektromagnetischen Strahlungsquelle erstrecken und an der Apertur enden. Alternativ kann die elektromagnetische Strahlungsquelle eine LED umfassen, die einen transparenten von der Lichtquelle zu der Spitze verjüngend zulaufenden Körper aufweist, wobei der verjüngend zulaufende Körper von einem opaken Material umgeben ist und so abgeschnitten ist, dass eine Spitze des transparenten Körpers mit dem vorgegebenen Durchmesser geschaffen ist. Im Betrieb ist die Spitze im Kontakt mit der Oberfläche und wird mittels einer Steuerung, welche die Relativbewegung der Spitze zu der photoempfindlichen Oberfläche steuert, computergesteuert bewegt.

Aus der DE 199 55 383 A1 ist ein Verfahren zum Aufbringen von farbigen Informationen auf einen Gegenstand bekannt, wobei der Gegenstand zumindest in einer oberflächennahen Schicht mindestens zwei verschiedenartige farbgebende Partikel aufweist, die unter Einfluss von Laserstrahlung die Farbe dieser Schicht verändern, wobei die Laserstrahlung mit mindestens zwei verschiedenen Wellenlängen verwendet wird, um die Farbe dieser Schicht zu ändern, die Beaufschlagung des Gegenstands mit Laserstrahlung im Vektor- und/oder Rasterverfahren über eine Zweikoordinatenstrahlablenkeinrichtung und eine Fokussiereinrichtung zur Fokussierung der Laserstrahlung auf die Schicht des Gegenstandes erfolgt. Erfindungsgemäß ist mindestens ein Strahlführungsmittel vorgesehen, um einen ersten Laserstrahl mit der Wellenlänge λ₁ um mindestens einen weiteren Laserstrahl mit einer Wellenlänge λ₂, die von der Wellenlänge des ersten Laserstrahls verschieden ist, über die Zweikoordinatenstrahlablenkeinrichtung und die Fokussiereinrichtung auf die Schicht des Gegenstands zu führen. Für die Zweikoordinatenstrahlablenkeinrichtung ist eine Anordnung aus zwei um zueinander senkrecht stehende Achsen gelagerte Ablenkspiegel vorgeschlagen. Eine Fokussierung erfolgt durch eine feststehende Planfeldoptik. Da das Licht die Planfeldoptik nicht jeweils auf der optischen Achse durchläuft, treten chromatische Aberrationseffekte in der Fokussiereinrichtung auf. Insbesondere wenn unterschiedlich farbiges Laserlicht zum Markieren verwendet wird, ist hierfür eine aufwendige Kompensation notwendig.

Der Erfindung liegt die Aufgabe zugrunde, ein verbessertes Verfahren und eine verbesserte Vorrichtung zum dauerhaften Markieren von Wert- oder Sicherheitsdokumenten zu schaffen.

Die Aufgabe wird erfindungsgemäß durch eine Vorrichtung mit den Merkmalen des Patentanspruchs 1 sowie ein Verfahren mit den Merkmalen des Patentanspruchs 9 geschaffen. Vorteilhafte Ausgestaltungen der Erfindung ergeben sich aus den Unteransprüchen.

### Grundidee der Erfindung

Die Grundidee der Erfindung liegt darin, die Lichtzuführung über eine relativ zum Wert- oder Sicherheitsdokument bewegliche Lichtleitfaser zu bewerkstelligen. Deren Austrittsfläche wird in einer Ebene, welche als Positionierebene bezeichnet wird, verschoben, um hierüber das austretende Licht lateral auf dem Wert- oder Sicherheitsdokument zu positionieren.

### Definitionen

Ein Sicherheitselement ist eine bauliche Einheit, die zumindest ein Sicherheitsmerkmal umfasst. Ein Sicherheitselement kann eine selbständige bauliche Einheit sein, die mit einem Sicherheitsdokument, welches auch ein Wertdokument sein kann, verbunden, beispielsweise verklebt, werden kann. Es kann sich aber auch um einen integralen Bestandteil eines Sicherheitsdokuments handeln. Ein Beispiel für ersteres ist ein auf eine Banknote aufklebbarer so genannter Holopatch (ein Hologramm aufweisender Patch, beispielsweise ein Hologrammfilmabschnitt) oder ein auf ein Sicherheitsdokument aufklebbares Visum. Ein Beispiel für letzteres ist ein in ein Ausweisdokument eingeprägtes beugendes Oberflächenrelief.

Ein Sicherheitsmerkmal ist eine Struktur, die nur mit (gegenüber einfachen Kopieren) erhöhten Aufwand oder gar nicht unautorisiert herstellbar bzw. reproduzierbar ist, beziehungsweise eine Fälschung oder Verfälschung visuell und/oder maschinell erkennbar macht.

Als Sicherheitsdokumente seien lediglich beispielhaft genannt Personalausweise, Reisepässe, ID-Karten, Zugangskontrollausweise, Visa, Steuerzeichen, Tickets, Führerscheine, Kraftfahrzeugpapiere sowie Wertdokumente, welche insbesondere Banknoten, Schecks, Postwertzeichen und Kreditkarten umfassen, und beliebige Chipkarten und Haftetiketten (z.B. zur Produktsicherung). Sicherheitsdokumente, die ebenfalls einen Wert verkörpern, werden auch als Wertdokumente bezeichnet. Eine scharfe Abgrenzung dieser beiden Begrifflichkeiten ist häufig nicht möglich. Eine Kreditkarte stellt beispielsweise ein über Sicherheitsmerkmale und Sicherheitselemente gegen Nachahmung und Verfälschung geschütztes Sicherheitsdokument dar, welches über den reinen Materialwert der Karte keinen Wert unmittelbar repräsentiert, jedoch eine Verfügung über große Vermögenswerte ermöglicht.

Eine Lichtleitfaser ist eine Faser aus einem transparenten Material, an dessen Grenzfläche über Totalreflexion eine Leitung von Licht im Innern der Faser erfolgen kann.

Ein Faserlaser ist ein Laser, dessen aktives Medium, in dem die lichtinduzierte Emission von elektromagnetischer Strahlung erfolgt, eine Lichtleitfaser ist.

Ein Muster besteht typischerweise aus einer Vielzahl nebeneinander angeordneter Mustereinheiten bzw. Pixelpunkten. Die Mustereinheiten bzw. Pixel eines Musters sind einander zugeordnet und in definierter Weise lateral zueinander angeordnet, typischerweise in Ein- oder Zweiraumdimensionen, und ergeben in der Gesamtbetrachtung eine Darstellung, beispielsweise ein Bild, ein Symbol, ein Logo, einen Schriftzug (Buchstaben, Zahlen, alphanumerische Zeichen) oder ein Code (z.B. ein Strichcode). Ein Individualisierungsmuster ist ein Muster, welches zur Individualisierung verwendet wird.

Individualisierend ist ein Muster, wenn es einzigartig für eine Person oder einen Gegenstand oder eine Gruppe von Personen oder Gegenständen aus einer größten Gesamtheit von Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise die Nummer des Personalausweises oder das Passbild. Ein für eine Gruppe von Geldscheinen innerhalb der Gesamtmenge der Geldscheine individualisierender Code ist die Wertigkeit. Für einen Geldschein individualisierend ist die Seriennummer. Nicht individualisierend ist ein Muster, welches für alle Elemente einer Gesamtheit identisch ist. Für Geldscheine ist dies beispielsweise ein Wappen, welches auf allen Geldscheinen aufgedruckt ist.

### Bevorzugte Ausführungsformen

Insbesondere wird eine Markierungsvorrichtung für Wert- und/oder Sicherheitsdokumente, umfassend mindestens eine Laserlichtquelle, eine Lichtführungsvorrichtung, die mit der Laserlichtquelle gekoppelt ist, so dass Licht der Laserlichtquelle auf einem Wert- oder Sicherheitsdokument gesteuert positionierbar ist, vorgeschlagen, wobei vorgesehen ist, dass die Lichtführungsvorrichtung eine relativ zu dem Wert- und/oder Sicherheitsdokument beweglich gelagerte Lichtleitfaser umfasst, die mit mindestens einer Antriebseinrichtung so gekoppelt ist, dass das Licht über eine Bewegung einer Austrittsfläche der Lichtleitfaser in einer Positionierebene relativ zu dem Wert- und/oder Sicherheitsdokument lateral auf dem Wert- oder Sicherheitsdokument positionierbar ist. Das Licht der Laserlichtquelle wird somit mittels einer Lichtleitfaser geführt und eine Positionierung des Lichts auf dem zu markierenden Wert- oder Sicherheitsdokument erfolgt über ein Bewegen der Austrittsfläche der Lichtleitfaser relativ zu dem Wert- oder Sicherheitsdokument. Gegenüber dem Stand der Technik besteht der Vorteil, dass das zur Markierung verwendete Licht bei geeigneter Orientierung der Positionierebene relativ zu einer Oberfläche des Wert- oder Sicherheitsdokuments, vorzugsweise parallel hierzu, jeweils unter demselben Winkel, vorzugsweise senkrecht, auf das Wert- und/oder Sicherheitsdokument auftrifft und darüber hinaus eine Weglänge des zurückgelegten Lichtwegs unabhängig von der beleuchteten Position auf dem Wert- und/oder Sicherheitsdokument gleich ist. Hierdurch ist es möglich, das verwendete Licht stärker zu fokussieren und dennoch an allen Stellen des Wert- oder Sicherheitsdokuments eine identische Fokusausdehnung bei der Markierung zu verwenden. Probleme, die aufgrund einer leicht unterschiedlichen Einstrahlrichtung bei den Führungsvorrichtungen aus dem Stand der Technik bekannt sind, können somit vermieden werden.

Erfindungsgemäß ist darüber hinaus vorgesehen, dass zusätzlich zu der Bewegung in der Positionierebene, welche in der Regel parallel zu einer Oberfläche eines planen Sicherheitsdokuments orientiert ist, eine Bewegung der Austrittsfläche der Lichtleitfaser möglich ist, um einen Lichtweg zwischen der Austrittsfläche und einer Oberfläche des Dokuments zu variieren. Hierüber kann eine Fokusposition innerhalb des Wert- oder Sicherheitsdokuments variiert werden.

Eine solche Wegänderung kann beispielsweise bei einer Ausführungsform darüber erreicht werden, dass die Austrittsfläche, von der das Licht geradlinig auf die Dokumentoberfläche geführt ist, zusätzlich zu der Bewegung in der Positionierebene, die parallel zur Oberfläche des Wert- oder Sicherheitsdokuments gewählt ist, senkrecht zu der Positionierebene bzw. der Oberfläche des Wert- oder Sicherheitsdokuments bewegbar ist.

Bei anderen Ausführungsformen, bei denen die Austrittsfläche beispielsweise gemeinsam mit einer Abbildungs- und/oder Fokussieroptik in der Positionierebene bewegt wird, um das austretende Licht lateral auf der Oberfläche des Wert- oder Sicherheitsdokuments zu positionieren, kann eine Änderung des Lichtwegs beispielsweise bei einigen Ausführungsformen dadurch erreicht werden, dass die Austrittsfläche des Lichtwellenleiters zusätzlich relativ zu Elementen der Abbildungs- und/oder Fokussieroptik, beispielsweise einen Umlenkspiegel, in der Positionierebene relativ bewegbar ist. Somit ist zum einen eine Positionierung lateral auf dem Dokument über eine Bewegung der Austrittsfläche gemeinsam mit der Abbildungs- und/oder Fokussierungsoptik möglich und zusätzlich durch eine Relativbewegung der Austrittsfläche relativ zu der Abbildungs- und/oder Fokussieroptik in der Positionierebene eine Veränderung der Fokusposition senkrecht zur Oberfläche des Wert- oder Sicherheitsdokuments möglich.

Bevorzugt ist, eine Fokussieroptik, sofern eine solche verwendet wird, mit der jeweiligen Austrittsfläche der Lichtleitfaser zu koppeln. Dies bedeutet, dass die Fokussieroptik mittels der Antriebseinrichtung gemeinsam mit der Austrittsfläche der Lichtleitfaser bewegt wird.

Bei einer bevorzugten Ausführungsform ist die Laserlichtquelle in die Lichtleitfaser integriert. Hierdurch werden etwaige Koppelverluste bei der Einkopplung in die Faser reduziert. Somit ist ein kompakter und einfacher Aufbau möglich. Gegenüber den bisher zumeist verwendeten Festkörperlasern, beispielsweise Nd:YAG-Lasern, können Leistungsschwankungen in dem Laser selbst, die durch thermische Effekte in dem aktiven Medium auftreten, bei einem Faserlaser nahezu vollständig eliminiert werden. Somit kann die bei der Einstrahlung eingebrachte Energiemenge sehr präzise vorgewählt werden, so dass optimale Markierungsergebnisse erzielbar sind. Faserlaser-Systeme benötigen keine aufwendige Kühlung und erzielen einen hohen elektro-optischen Wirkungsgrad. Ferner kann über eine parametrische Abstimmung mit derselben Hardware Laserlicht unterschiedlicher Wellenlängen erzeugt werden.

Bei einer Weiterbildung der Erfindung ist vorgesehen, dass die Lichtführungsvorrichtung mindestens eine weitere bewegliche, vorzugsweise sogar mehrere weitere beweglich gelagerte Lichtleitfasern umfasst. Hierdurch wird es möglich, zeitgleich an mehreren Stellen oder zeitgleich mit unterschiedlichen Lichtwellenlängen eine Markierung auf dem oder in das Wert- oder Sicherheitsdokument einzubringen. Werden unterschiedliche Lichtwellenlängen verwendet, so kann jede Lichtleitfaser mit einer auf die entsprechende Lichtwellenlänge angepasste Fokussieroptik versehen sein.

Bei einer bevorzugten Ausführungsform der Erfindung ist die Austrittsfläche der mindestens einen Lichtleitfaser relativ zu der mindestens einen weiteren Lichtleitfaser oder gegebenenfalls relativ zu den mehreren Austrittsflächen der mehreren Lichtleitfasern in der Positionierebene positionierbar. Besonders bevorzugt sind die mehreren Lichtleitfasern bzw. deren Austrittsflächen in der Positionierebene individuell angetrieben und relativ zueinander positionierbar. Es versteht sich für den Fachmann, dass hierbei mechanische Restrektionen existieren, da die Lichtleitfasern einander nicht durchdringen können und somit nicht an ein und derselben Position zeitgleich anordenbar sind.

Bei einer Ausführungsform der Erfindung ist die Anzahl der Lichtleitfasern so gewählt, dass bei einer Relativbewegung der Gesamtheit der Lichtleitfasern entlang einer

Raumrichtung das gesamte Wert oder Sicherheitsdokument oder zumindest ein Streifen des Wert- oder Sicherheitsdokuments mit einem zweidimensionalen Muster markiert werden kann. Hierbei können die Lichtleitfasern entlang einer Linie oder einer beliebigen anderen Anordnung relativ zueinander starr angeordnet sein.

Bei einer Ausführungsform ist vorgesehen, dass mit der mindestens einen Lichtleitfaser ein optisches Veränderungselement gekoppelt oder in diese integriert ist, über welches das ausgekoppelte Licht hinsichtlich seiner Frequenz und/oder Intensität modifizierbar ist. Dieses ist insbesondere dann von Vorteil, wenn die Lichtführungsvorrichtung mehrere weitere Lichtleitfasern umfasst. Diese weisen dann vorzugsweise ebenfalls jeweils ein der Faser zugeordnetes optisches Veränderungselement auf.

Da die von einer Laserlichtquelle erzeugte Lichtenergie in der Regel ausreicht, das Dokument an mehreren Stellen gleichzeitig zu markieren, ist bei einer Ausführungsform vorgesehen, dass das Licht der einen Laserlichtquelle in die mindestens eine Lichtleitfaser und die mindestens eine weitere oder gegebenenfalls mehrere weitere Lichtleitfasern eingekoppelt wird. Auch bei einer solchen Ausführungsform ist es vorteilhaft, wenn den einzelnen Lichtleitfasern jeweils ein optisches Veränderungselement zugeordnet ist. Es versteht sich, dass auch Ausführungsformen vorteilhaft sind, die mehrere Laserlichtquellen umfassen, deren Licht jeweils in eine oder mehrere der mehreren weiteren Lichtwellenleiter eingekoppelt wird.

Sind mehrere Lichtleitfasern vorhanden, so kann für diese die Fokusposition innerhalb des Wert- oder Sicherheitsdokument entlang einer Normalen zur Oberfläche des Wert- oder Sicherheitsdokuments bei einer Ausführungsform individuell eingestellt werden. Hierüber können gezielt Markierungen in unterschiedlichen Ebenen bzw. Schichten, aus denen das Wert- oder Sicherheitsdokument zusammengefügt ist, eingebracht werden. Vorzugsweise ist dies gesteuert möglich.

Die Merkmale des erfindungsgemäßen Verfahrens weisen dieselben Vorteile wie die entsprechenden Merkmale der erfindungsgemäßen Markierungsvorrichtung auf.

Nachfolgend wird die Erfindung anhand bevorzugter Ausführungsbeispiele unter Bezugnahme auf eine Zeichnung näher erläutert. Hierbei zeigen:
- Fig. 1: eine schematische Darstellung einer Markierungsvorrichtung für Wert- oder Sicherheitsdokumente;
- Fig. 2: eine weitere Ausführungsform einer Markierungsvorrichtung;
- Fig. 3: noch eine andere Ausführungsform einer Markierungsvorrichtung;
- Fig. 4: eine schematische Darstellung einer Anordnung von Austrittsflächen von Lichtleitfasern relativ zu einem zu markierenden Wert- und/oder Sicherheitsdokument; und
- Fig. 5a, 5b: eine Abbildungs- und Fokussieroptik zum Variieren in Fokuslänge.

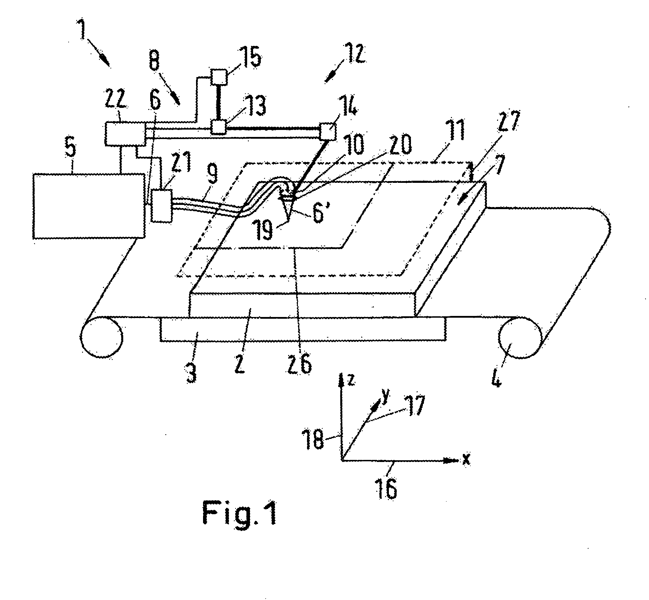

In Fig. 1 ist schematisch eine Markiervorrichtung 1 zum permanenten Markieren eines Wert- oder Sicherheitsdokuments 2 dargestellt. Das Wertdokument 2 ist auf einer Halterung 3 angeordnet. Dieser kann das Wert- oder Sicherheitsdokument 2 mittels einer Transportvorrichtung 4 zugeführt und/oder von dieser abgeführt werden. Bei einigen Ausführungen ist es möglich, dass die Transportvorrichtung 4 die Halterung 3 ausbildet. Dem Fachmann sind unterschiedliche Vorrichtungen zum transportieren von Wert- oder Sicherheitsdokumenten bekannt. In der Regel wird die Markierung des Wert- oder Sicherheitsdokuments 2 durchgeführt, nachdem dieses bis auf die noch anzubringende Markierung fertiggestellt ist. Ebenso ist es jedoch auch möglich, die Markierung vorzunehmen, bevor das Wert- oder Sicherheitsdokument 2 vollständig fertiggestellt ist, beispielsweise bevor dieses aus einem Bogen oder einem Streifen vereinzelt ist.

Die Markiervorrichtung 1 umfasst eine Laserlichtquelle 5. Die Laserlichtquelle 5 ist ausgebildet, Laserlicht 6 zu erzeugen. In der Regel wird die Laserlichtquelle 5 eine gepulste Lichtquelle sein. Beispielsweise kann es sich um einen Festkörperlaser, z.B. einen Nd:YAG-Laser, handeln. Um das Wert- oder Sicherheitsdokument 2 zu markieren, muss das Laserlicht 6 gezielt auf dem Wert- oder Sicherheitsdokument 2, d.h. auf dessen Oberfläche 7 oder im Innern des Wert- oder Sicherheitsdokuments 2, positioniert werden. Hierfür ist eine Lichtführungsvorrichtung 8 vorgesehen. Die Lichtführungsvorrichtung 8 umfasst eine Lichtleitfaser 9, in die das Laserlicht 6 eingekoppelt wird. Eine Austrittsfläche 10 der Lichtleitfaser 9 wird in einer Positionierebene 11 bewegt. Die Positionierebene 11 ist bei einer bevorzugten Ausführungsform parallel zu der Oberfläche 7 des Wert- oder Sicherheitsdokuments 2 ausgebildet. Um die Austrittsfläche 10 in der Positionierebene 11 bewegen bzw. positionieren zu können, ist die Lichtleitfaser 9 mit einer Antriebseinrichtung 12 gekoppelt. Die Antriebseinrichtung 12 umfasst bei der dargestellten Ausführungsform einen X-Achsenaktor 13, einen Y-Achsenaktor 14 und einen Z-Achsenaktor 15. Diese sind so miteinander verbunden und ausgerichtet, dass der X-Achsenaktor eine Bewegung der Austrittsfläche 10 der Lichtleitfaser 9 parallel zu einer X-Achse 16, der Y-Achsenaktor 14 parallel zu einer Y-Achse 17 und der Z-Achsenaktor 15 parallel zu einer Z-Achse 18 bewirkt. Hierbei wird angemerkt, dass eine Bewegung parallel zur Z-Achse eine Veränderung der Positionierebene 11 bewirkt. Über die Antriebseinrichtung 12 ist es somit möglich, eine Lage eines Fokuspunktes 19 des aus der Austrittsfläche 10 austretenden Laserlichts 6' entlang einer Normalen zur Oberfläche 7 des Wert- oder Sicherheitsdokuments 2 zu positionieren. Eine Bewegung der Austrittsfläche 10 in der Positionierebene 11 bewirkt hingegen eine laterale Ausrichtung und Positionierung des aus der Austrittsfläche 10 austretenden Laserlichts 6' bzw. des hiervon gebildeten Fokuspunktes 19.

Bei einigen Ausführungsformen ist vorgesehen, dass mit der Austrittsfläche 10 der Lichtleitfaser 9 eine Abbildungs- und/oder Fokussieroptik 20 gekoppelt ist. Diese wird mit der Austrittsfläche 10 der Lichtleitfaser mitbewegt. Bei einigen Ausführungsformen ist die Austrittsfläche 10 der Lichtleitfaser so ausgestaltet, dass das austretende Laserlicht 6' fokussiert wird. Über die an der jeweiligen Position in das Wert- oder Sicherheitsdokument eingebrachte Energiemenge, welche beispielsweise über eine Pulsintensität bzw. eine Anzahl von an derselben Position eingebrachten Lichtpulsen variiert werden kann, wird die Art der Markierung, beispielsweise eine Schwärzung hinsichtlich einer Graustufe, geregelt. Über die Antriebseinrichtung 12 ist es möglich, eine Markierung vektoriell oder im Raster vorzunehmen.

Ein Abstand 27 der Positionierebene 11 von der Oberfläche 7 bzw. dem Wert- oder Sicherheitsdokument 2 muss in vielen Anwendungsfällen bei der Markierung nicht variiert werden. Somit reicht eine Positioniereinrichtung 8 aus, die lediglich einen X-Achsenaktor 13 und einen Y-Achsenaktor 14 umfasst. Es versteht sich für den Fachmann, dass für die Positionierung der Austrittsfläche 10 der Lichtleitfaser 9 in der Positionierebene 11 auch ein Satz von Aktoren verwendet werden kann, die keine Bewegungen parallel zu den Koordinatenachsen bewirken, jedoch im Zusammenwirken in der Lage sind, die Austrittsfläche 10 in der Positionierebene 11 lateral flächig an unterschiedlichen Stellen zu positionieren.

Es versteht sich für den Fachmann, dass die Lichtaustrittsfläche 10 in der Positionierebene nicht in allen Ausführungsformen so positionierbar sein muss, dass sämtliche Stellen auf der Oberfläche des Dokuments mit dem austretenden Laserlicht 6' beleuchtet werden können. Das Laserlicht muss lediglich an jene Positionen auf dem Wert- oder Sicherheitsdokument positionierbar sein, an welchen Markierungen vorgenommen werden sollen. Ist nur ein begrenzter Bereich des Wert- oder Sicherheitsdokuments für eine Markierung vorgesehen, so reicht auch ein an diesen Bereich angepasster Positionierbereich 26, in dem die Austrittsfläche 10 der Lichtleitfaser 9 positionierbar ist.

Um die Lichtintensität oder auch eine Lichtwellenlänge, beispielsweise über eine Frequenzvervielfachung, zu steuern, ist bei einigen Ausführungsformen ein Veränderungselement in die Lichtleitfaser 9 integriert oder mit dieser gekoppelt. Das Veränderungselement 21 kann beispielsweise als elektrooptischer oder akustooptischer Modulator bzw. Schalter ausgebildet sein. Somit kann individuell unabhängig von der vom Laser bereitgestellten Pulsenergie die lokal zugeführte Energiemenge und hierüber beispielsweise eine Schwärzung in Graustufen gesteuert werden.

Die einzelnen Komponenten der Markiervorrichtung werden über eine Steuerung 22 gesteuert, so dass die Markierung automatisiert ausgeführt wird. Der Steuerung 22 werden lediglich Daten zugeführt, die das Muster für die Markierung enthalten, so dass die entsprechenden Bereiche des Wert- oder Sicherheitsdokuments 2 mit einer entsprechenden Laserlichtintensität bestrahlt werden, um die entsprechende Markierung in dem Wert- oder Sicherheitsdokument 2 zu bewirken.

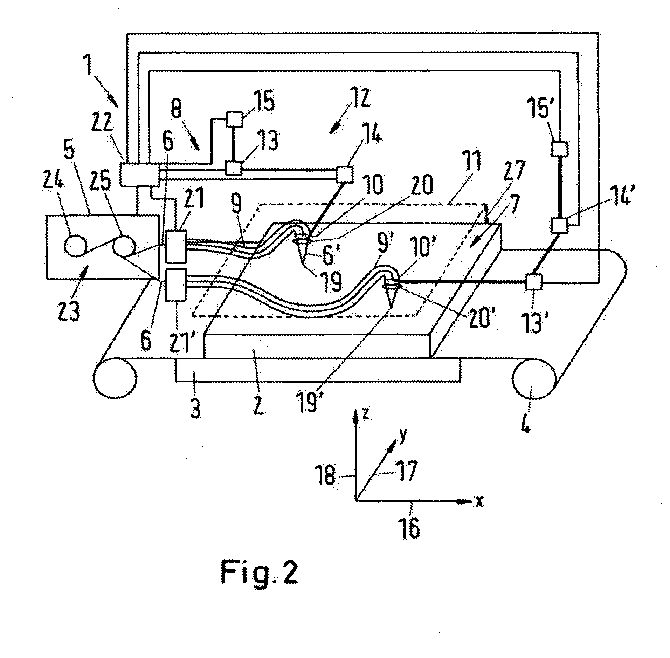

In Fig. 2 ist eine weitere Ausführungsform einer Markiervorrichtung 1 schematisch dargestellt. Technisch gleich wirkende Merkmale sind mit identischen Bezugszeichen versehen. Die dargestellte Ausführungsform unterscheidet sich von der nach Fig. 1 dadurch, dass die Lichtführungsvorrichtung 8 bei dieser Ausführungsform zwei Lichtleitfasern 9, 9' umfasst. Diese sind entsprechend jeweils mit einer Antriebseinrichtung 8 bzw. 8' gekoppelt, die analog zu der Antriebseinrichtung 8 nach Fig. 1 ausgebildet sind. Diese Ausführungsform bietet den Vorteil, dass das Wert- oder Sicherheitsdokument 2 zeitgleich oder quasi zeitgleich an mehreren Stellen markiert werden kann.

Die Laserlichtquelle 5 ist bei dieser Ausführungsform als Faserlaser 23 mit einem Seed-Laser 24 und einem Verstärkerring 25 schematisch dargestellt. Es versteht sich für den Fachmann, dass auch eine andere Laserlichtquelle zusammen mit dieser Ausführungsform eingesetzt werden kann. Ebenso kann ein Faserlaser 23 als Laserlichtquelle 5 in der Ausführungsform nach Fig. 1 verwendet werden.

Das aus der Laserlichtquelle 6 austretende Licht wird entweder über einen Strahlteiler (nicht dargestellt) geteilt und in die Lichtleitfaser 9, 9' simultan eingekoppelt oder über einen elektrooptischen oder elektroakustischen Schalter alternierend in die Lichtleitfasern 9, 9' eingekoppelt. Da die mechanische Bewegungsgeschwindigkeit der Austrittsflächen 10, 10' über die Antriebseinrichtungen 8, 8' in der Regel begrenzt sind, kann bei geeignet gewählter Repetitionsrate des Laserlichts 6, 6' selbst bei maximaler Bewegungsgeschwindigkeit der Austrittsflächen 10, 10' eine Markierung des Wert- oder Sicherheitsdokuments 2 erfolgen, auch wenn jeder zweiter Laserpuls in die jeweils andere Lichtleitfaser 9, 9' eingekoppelt wird. In diesem Fall wird das Markieren immer noch als zeitgleich bzw. quasi zeitgleich angesehen.

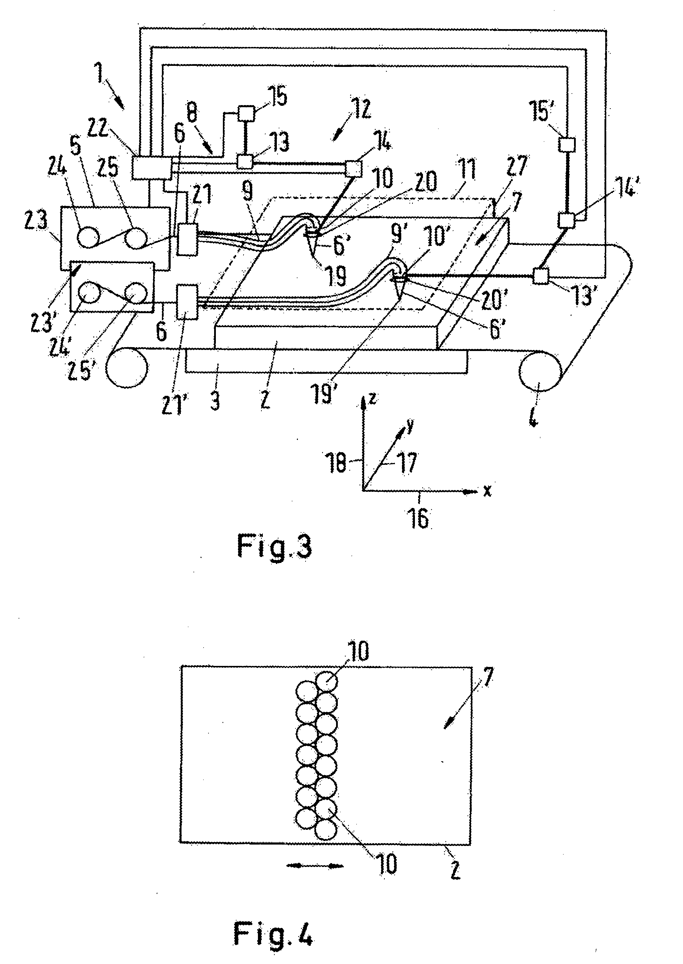

In Fig. 3 ist eine weitere Ausführungsform einer Markiervorrichtung 1 schematisch dargestellt. Bei dieser Ausführungsform sind zwei Laserlichtquellen 5, 5' vorgesehen. Hierdurch ist es auf einfache Weise möglich, an unterschiedlichen Stellen mit unterschiedlichen Repetitionsraten, Wellenlängen usw. Markierungen auf oder in das Wert- oder Sicherdokument 2 einzubringen.

In Fig. 4 sind schematisch die Austrittsflächen 10 einer weiteren Ausführungsform einer Markiervorrichtung schematisch dargestellt, bei der eine Vielzahl von Lichtleitfasern 9 miteinander gekoppelt über eine Antriebseinrichtung gemeinsam relativ zu dem Wert- oder Sicherheitsdokument 2 bewegbar sind. Bei einer solchen Ausführungsform können auch großflächige Markierungen in kurzer Zeit bewerkstelligt werden. Auch bei dieser Ausführungsform ist vorzugsweise jede der Lichtleitfaser 9 mit einem Veränderungselement (nicht dargestellt) gekoppelt, so dass über jede Lichtleitfaser 9 die jeweils eingekoppelte Laserlichtintensität und/oder Laserfrequenz steuerbar ist. Während bei der Verwendung von Festkörperlasern, wie beispielsweise Nd:YAG-Lasern, aufgrund thermischer Linseneffekte nur eine begrenzte Strahlqualität zu erreichen ist, ist die mit einem Faserlasersystem zu erreichende Strahlqualität deutlich verbessert. Da insgesamt die thermischen Verluste deutlich verringert sind, lässt sich der Wirkungsgrad und somit die benötigte Energie deutlich senken. Da keine besondere Kühlung erforderlich ist, kann der gesamte Aufbau sehr viel kompakter ausgeführt werden, so dass ein Einpassen in eine Fertigungsstraße oder Anlage deutlich einfacher ist. Da Faserlasersysteme darüber hinaus einen geringeren Wartungsaufwand und Installationsaufwand erforderlich machen, können Lasermarkierungssysteme auch dezentral aufgestellt werden.

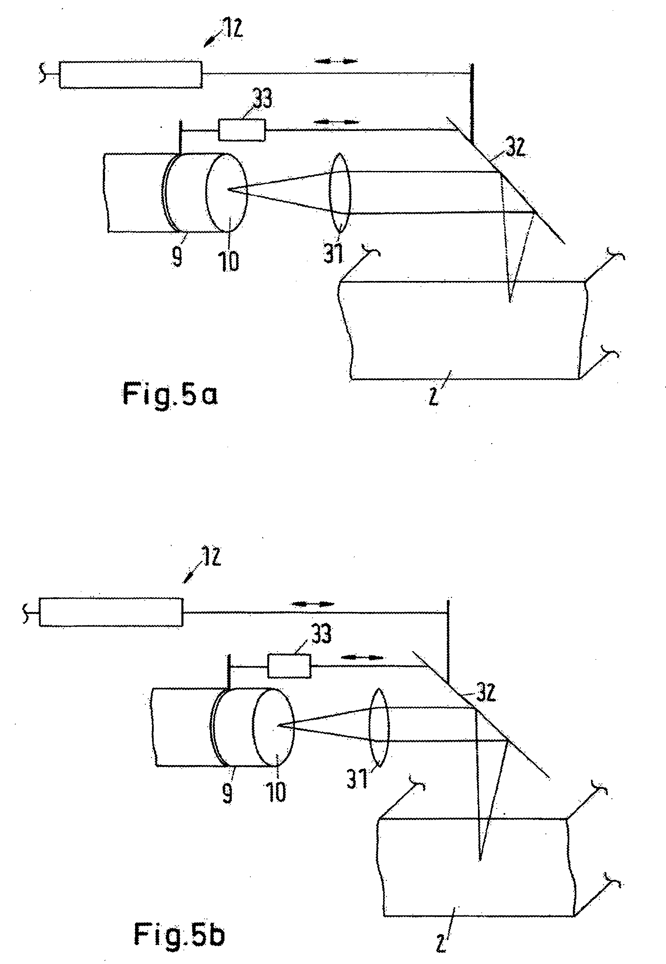

In Fig. 5a und 5b ist eine Ausführungsform gezeigt, bei der eine Fokuspositionierung, d.h. eine Positionierung des Fokuspunktes parallel zur Z-Achse, analog zu der Geometrie nach Fig. 1 beschrieben ist. Die Ausführungsform umfasst eine Abbildung- und Fokussieroptik 20 Diese umfasst eine Fokussierlinse 31 und einen Ablenkspiegel 32. Zusätzlich ist ein Fokussieraktor 33 vorgesehen. Über diesen kann eine Relativbewegung zwischen dem Ablenkspiegel 32 und der Austrittsfläche 10 der Lichtleitfaser 9 bewirkt werden. Hierüber verändert sich die Fokusposition entlang der Z-Achse. Insgesamt wird die Abbildungs- und Fokussiereinrichtung 20 gemeinsam mit der Austrittsfläche 10 der Lichtleitfaser in der Positionierebene 11, welche mit der XY-Ebene zusammenfällt, bewegt werden, um das Laserlicht 6' auf dem Wert- oder Sicherheitsdokument lateral zu positionieren. Zusätzlich wird über den Fokussieraktor 33 ebenfalls eine Bewegung der Lichtaustrittsfläche 10 in der Positionierebene 11 bewirkt, die jedoch lediglich den Abstand zum Umlenkspiegel 32 und hierüber die Fokusposition senkrecht zur Positionierebene verändert.

### Bezugszeichenliste

- 1: Markiervorrichtung
- 2: Wert- oder Sicherheitsdokument
- 3: Halterung
- 4: Transportvorrichtung
- 5: Laserlichtquelle
- 6, 6': Laserlicht
- 7: Oberfläche
- 8, 8': Lichtführungsvorrichtung
- 9, 9': Lichtleitfaser
- 10, 10': Austrittsfläche
- 11: Positionierebene
- 12, 12': Antriebseinrichtung
- 13, 13': X-Achsenaktor
- 14, 14': Y-Achsenaktor
- 15, 15': Z-Achsenaktor
- 16: X-Achse
- 17: Y-Achse
- 18: Z-Achse
- 19: Fokuspunkt
- 20: Abbildungs- und/oder Fokussieroptik
- 21: Veränderungselement
- 22: Steuerung
- 23: Faserlaser
- 24: Seed-Laser
- 25: Verstärkerring
- 26: Positionierbereich
- 27: Abstand
- 31: Linse
- 32: Umlenkspiegel
- 33: Fokussieraktor

## Patentansprüche

1. Markierungsvorrichtung (1) für ein Wert- oder Sicherheitsdokument (2) umfassend mindestens eine Laserlichtquelle (5),
eine Lichtführungsvorrichtung (8), die mit der Laserlichtquelle (5) gekoppelt ist, so dass Laserlicht (6) der Laserlichtquelle (5) auf dem Wert- oder Sicherheitsdokument (2) gesteuert positionierbar ist,
die Lichtführungsvorrichtung (8) eine relativ zu dem Wert- oder Sicherheitsdokument (2) beweglich gelagerte Lichtleitfaser (9) umfasst, die mit mindestens einer Antriebseinrichtung (12) so gekoppelt ist, dass das Laserlicht (6') über eine Bewegung einer Austrittsfläche (10) der Lichtleitfaser (9) in einer Positionierebene (11) lateral auf dem Wert- oder Sicherheitsdokument (2) positionierbar ist **dadurch gekennzeichnet, dass**
Austrittsfläche (10) der Lichtleitfaser (9) zusätzlich so bewegbar ist, dass ein Lichtweg zwischen der Austrittsfläche und einer Oberfläche des Wert- oder Sicherheitsdokuments (2) variiert wird und hierüber eine Fokusposition innerhalb des Wert- oder Sicherheitsdokuments (2) variiert wird.

2. Markierungsvorrichtung (1) nach Anspruch 1, **dadurch gekennzeichnet, dass** die Austrittsfläche (10) mittels der mindestens einen Antriebseinrichtung (12) gemeinsam mit einer Abbildungs- und/oder Fokussieroptik (20) in der Positionierebene bewegt wird, um das austretende Licht lateral auf der Oberfläche des Wert- oder Sicherheitsdokuments (2) zu positionieren, und zusätzlich mittels eines Fokussieraktors (33) eine Relativbewegung der Austrittsfläche (10) relativ zu mindestens einem Element der Abbildungs- und/oder Fokussieroptik in der Positionierebene bewirkbar ist, um die Veränderung der Fokusposition senkrecht zur Oberfläche des Wert- oder Sicherheitsdokuments (2) zu erreichen.

3. Markierungsvorrichtung (1) nach Anspruch 1, **dadurch gekennzeichnet, dass** die Austrittsfläche (10), die mittels der mindestens einen Antriebseinrichtung (12) in der Positionierebene bewegbar ist, um das austretende Licht lateral auf der Oberfläche des Wert- oder Sicherheitsdokuments (2) zu positionieren, zusätzlich senkrecht zu der Positionierebene oder der Oberfläche des Wert- oder Sicherheitsdokuments bewegbar ist, um die Fokusposition in dem Wert- oder Sicherheitsdokument (2) zu variieren.

4. Markierungsvorrichtung (1) nach einem der vorangehenden Ansprüche, **dadurch gekennzeichnet, dass** die Laserlichtquelle (5) in die Lichtleitfaser (9) integriert ist.

5. Markierungsvorrichtung (1) nach einem der vorangehenden Ansprüche, **dadurch gekennzeichnet, dass** die Lichtführungsvorrichtung (8) mindestens eine weitere relativ zu dem Wert- oder Sicherheitsdokument (2) beweglich gelagerte Lichtleitfaser (9') umfasst.

6. Markierungsvorrichtung (1) nach Anspruch 5, **dadurch gekennzeichnet, dass** die Austrittsfläche (10) der mindestens einen Lichtleitfaser (9) relativ zu der Austrittsfläche (10') der mindestens einen weiteren Lichtleitfaser (9') in der Positionierebene (11) positionierbar ist.

7. Markierungsvorrichtung (1) nach einem der Ansprüche 5 oder 6, **dadurch gekennzeichnet, dass** in die mindestens eine Lichtleitfaser (9) und die mindestens eine weitere Lichtleitfaser (9') Laserlicht (6) derselben Laserlichtquelle (5) eingekoppelt wird.

8. Markierungsvorrichtung (1) nach einem der vorangehenden Ansprüche, **dadurch gekennzeichnet, dass** mit der mindestens einen Lichtleitfaser (9) ein optisches Veränderungselement (21) gekoppelt oder in diese integriert ist, über welches das aus der Austrittsfläche (10) ausgekoppelte Laserlicht (6') hinsichtlich seiner Frequenz und/oder Intensität modifizierbar ist.

9. Verfahren zum dauerhaften Markieren eines Wert- oder Sicherheitsdokuments (2) umfassend die Schritte:
Erzeugen von Laserlicht (6) und
Führen des Laserlichts (6) mittels einer Lichtführungsvorrichtung (8), sodass aus der Lichtführungsvorrichtung (8) austretendes Laserlicht (6') auf dem Wert- oder Sicherheitsdokument (2) positioniert wird und
das Wert- oder Sicherheitsdokument (2) lokal mittels des Laserlichts (6') markiert wird,
wobei Laserlicht (6) mittels einer Lichtleitfaser (9) geführt wird und eine Positionierung des Lichts auf dem zu markierenden Wert- oder Sicherheitsdokument (2) über ein Bewegung einer Austrittsfläche (10) der Lichtleitfaser (9) relativ zu dem Wert- oder Sicherheitsdokument (2) erfolgt,
**dadurch gekennzeichnet, dass**
Austrittsfläche (10) der Lichtleitfaser (9) zusätzlich so bewegt wird, dass ein Lichtweg zwischen der Austrittsfläche und einer Oberfläche des Wert- oder Sicherheitsdokuments (2) variiert wird und hierüber eine Fokusposition innerhalb des Wert- oder Sicherheitsdokuments (2) variiert wird.

10. Verfahren nach Anspruch 9, **dadurch gekennzeichnet, dass** die Austrittsfläche (10) mittels der mindestens einer Antriebseinrichtung (12) gemeinsam mit einer Abbildungs- und/oder Fokussieroptik (20) in einer Positionierebene bewegt wird, um das austretende Licht lateral auf der Oberfläche des Wert- oder Sicherheitsdokuments (2) zu positionieren, und zusätzlich mittels eines Fokussieraktors (33) eine Relativbewegung der Austrittsfläche (10) relativ zu mindestens einem Element der Abbildungs- und/oder Fokussieroptik in der Positionierebene bewirkt wird, um die Veränderung der Fokusposition senkrecht zur Oberfläche des Wert- oder Sicherheitsdokuments (2) zu erreichen.

11. Verfahren nach Anspruch 9, **dadurch gekennzeichnet, dass** die Austrittsfläche (10), die mittels der mit mindestens einer Antriebseinrichtung (12) in der Positionierebene bewegt wird, um das austretende Licht lateral auf der Oberfläche des Wert- oder Sicherheitsdokuments (2) zu positionieren, zusätzlich senkrecht zu der Positionierebene oder der Oberfläche des Wert- oder Sicherheitsdokuments bewegt wird um die Fokusposition in dem Wert- oder Sicherheitsdokument (2) zu variieren.

12. Verfahren nach einem der Ansprüche 9 bis 11, **dadurch gekennzeichnet, dass** über mehrere Lichtleitfasern zeitgleich oder quasizeitgleich Laserlicht (6') an unterschiedlichen Stellen auf dem zu markierenden Wert- oder Sicherheitsdokument (2) positioniert wird.

13. Verfahren nach Anspruch 12, **dadurch gekennzeichnet, dass** die Austrittsflächen (10, 10') der mehreren Lichtleitfasern (9, 9') gemeinsam relativ zu dem zu markierenden Wert- oder Sicherheitsdokument (2) positioniert werden.

14. Verfahren nach Anspruch 12 oder 13, **dadurch gekennzeichnet, dass** die mehreren Lichtleitfasern (9, 9') individuell relativ zu dem zu markierenden Wert- oder Sicherheitsdokument (2) positioniert werden.

## Claims

1. Marking device (1) for a valuable or security document (2), comprising
at least one laser light source (5),
a light guiding device (8), which is coupled to the laser light source (5), such that laser light (6) from the laser light source (5) can be positioned in a controlled manner on the valuable or security document (2),
the light guiding device (8) comprising an optical fibre (9) mounted in a movable manner relative to the valuable or security document (2), said optical fibre being coupled to at least one drive unit (12) in such a way that the laser light (6') can be positioned by means of a movement of an exit surface (10) of the optical fibre (9) in a positioning plane (11) laterally on the valuable or security document (2), **characterised in that** the exit surface (10) of the optical fibre (9) is additionally movable in such a way that a light path between the exit surface and a surface of the valuable or security document (2) is varied, and thereby a focus position inside the valuable or security document (2) is varied.

2. Marking device (1) according to claim 1, **characterised in that** the exit surface (10) is moved by means of at least one drive unit (12) in common with an imaging and/or focussing optics system (20) in the positioning plane, in order to position the emerging light laterally on the surface of the valuable or security document (2), and additionally, by means of a focussing actuating unit (33) a relative movement of the exit surface (10) can be caused relative to at least one element of the imaging and/or focussing optics system, in order to achieve a change in the focus position perpendicular to the surface of the valuable or security document (2).

3. Marking device (1) according to claim 1, **characterised in that** the exit surface (10), which is movable by means of the at least one drive unit (12) in the positioning plane, in order to position the emerging light laterally on the surface of the valuable or security document (2), is additionally movable perpendicular to the positioning plane or the surface of the valuable or security document, in order to vary the focus position in the valuable or security document (2).

4. Marking device (1) according to any one of the preceding claims, **characterised in that** the laser light source (5) is integrated into the optical fibre (9).

5. Marking device (1) according to any one of the preceding claims, **characterised in that** the light guiding device (8) comprises at least one further optical fibre (9') mounted in a movable manner relative to the valuable or security document (2).

6. Marking device (1) according to claim 5, **characterised in that** the exit surface (10) of the at least one optical fibre (9) can be positioned relative to the exit surface (10') of the at least one further optical fibre (9') in the positioning plane (11).

7. Marking device (1) according to any one of claims 5 or 6, **characterised in that** laser light (6) from the same laser light source (5) is coupled into the at least one optical fibre (9) and into the at least one further optical fibre (9').

8. Marking device (1) according to any one of the preceding claims, **characterised in that** an optical changing element (21) is coupled to the at least one optical fibre (9) or is integrated into this, by means of which laser light (6') which is coupled out of the exit surface (10) can be modified in respect of its frequency and/or intensity.

9. Method for sustained marking of a valuable or security document (2), comprising the steps of:
production of laser light (6) and
guiding of the laser light (6) by means of a light guiding device (8), such that the laser light (6') emerging from the light guiding device (8) is positioned on the valuable or security document (2), and the valuable or security document (2) is marked locally by means of the laser light (6'),
wherein laser light (6) is guided by means of an optical fibre (9) and a positioning of the light takes place on the valuable or security document (2) to be marked by means of a movement of an exit surface (10) of the optical fibre (9) relative to the valuable or security document (2),
**characterised in that** the exit surface (10) of the optical fibre (9) is additionally moved in such a way that a light path between the exit surface and a surface of the valuable or security document (2) is varied and thereby a focus position inside the valuable or security document (2) is varied.

10. Method according to claim 9, **characterised in that** the exit surface (10) is moved by means of at least one drive unit (12) in common with an imaging and/or focussing optics system (20) in a positioning plane, in order to position the emerging light laterally on the surface of the valuable or security documents (2), and, additionally, by means of a focussing actuating unit (33), a relative movement is caused of the exit surface (10) relative to at least one element of the imaging and/or focussing optics system in the positioning plane, in order to achieve a change in the focus position perpendicular to the surface of the valuable or security document (2).

11. Method according to claim 9, **characterised in that** the exit surface (10), which is moved by means of the at least one drive unit (12) in the positioning plane in order to position the emerging light laterally on the surface of the valuable or security document (2), is additionally moved perpendicular to the positioning plane or the surface of the valuable or security document, in order to vary the focus position in the valuable or security document (2).

12. Method according to any one of claims 9 to 11, **characterised in that**, by means of a plurality of optical fibres, laser light (6') is positioned simultaneously or quasi-simultaneously at different points on the valuable or security document (2) which is to be marked.

13. Method according to claim 12, **characterised in that** the exit surfaces (10, 10') of the plurality of optical fibres (9, 9') are positioned in common relative to the valuable or security document (2) which is to be marked.

14. Method according to claim 12 or 13, **characterised in that** the plurality of optical fibres (9, 9') are positioned individually relative to the valuable or security document (2) which is to be marked.

## Revendications

1. Dispositif de marquage (1) pour un document de valeur ou de sécurité (2) comportant au moins une source de lumière laser (5),
un dispositif de guidage de lumière (8), qui est couplé à la source de lumière laser (5) de sorte que la lumière laser (6) de la source de lumière laser (5) puisse être positionnée par le biais de commandes sur le document de valeur ou de sécurité (2),
le dispositif de guidage de lumière (8) comporte une fibre guide d'ondes optiques (9), logée mobile par rapport au document de valeur ou de sécurité (2), qui est couplée avec au moins un système d'entraînement (12) de sorte que la lumière laser (6') puisse être positionnée par le biais d'un déplacement d'une surface de sortie (10) de la fibre guide d'ondes optiques (9) dans un plan de positionnement (11) latéralement sur le document de valeur ou de sécurité (2),
**caractérisé en ce que**
la surface de sortie (10) de la fibre guide d'ondes optiques (9) peut être en plus déplacée de sorte qu'un trajet de la lumière entre la surface de sortie et une face supérieure du document de valeur ou de sécurité (2) soit varié et que, à la suite de cela, une position du foyer soit variée à l'intérieur du document de valeur ou de sécurité (2).

2. Dispositif de marquage (1) selon la revendication 1, **caractérisé en ce que** la surface de sortie (10) est déplacée dans le plan de positionnement au moyen dudit au moins un système d'entraînement (12) conjointement avec une optique de reproduction et/ou de focalisation (20) afin de positionner la lumière sortante latéralement sur la face supérieure du document de valeur ou de sécurité (2), et **en ce que**, en plus au moyen d'un actionneur de focalisation (33), un déplacement relatif de la surface de sortie (10) par rapport à au moins un élément de l'optique de reproduction et/ou de focalisation peut être effectué dans le plan de positionnement pour obtenir la modification de la position du foyer perpendiculairement à la face supérieure du document de valeur ou de sécurité (2).

3. Dispositif de marquage (1) selon la revendication 1, **caractérisé en ce que** la surface de sortie (10), qui peut être déplacée au moyen dudit au moins un système d'entraînement (12) dans le plan de positionnement afin de positionner la lumière sortante latéralement sur la face supérieure du document de valeur ou de sécurité (2), peut être en plus déplacée perpendiculairement au plan de positionnement ou à la face supérieure du document de valeur ou de sécurité afin de varier la position du foyer dans le document de valeur ou de sécurité (2).

4. Dispositif de marquage (1) selon l'une quelconque des revendications précédentes, **caractérisé en ce que** la source de lumière laser (5) est intégrée dans la fibre guide d'ondes optiques (9).

5. Dispositif de marquage (1) selon l'une quelconque des revendications précédentes, **caractérisé en ce que** le dispositif de guidage de lumière (8) comporte au moins une autre fibre guide d'ondes optiques (9') logée mobile par rapport au document de valeur ou de sécurité (2).

6. Dispositif de marquage (1) selon la revendication 5, **caractérisé en ce que** la surface de sortie (10) de ladite au moins une fibre guide d'ondes optiques (9) peut être positionnée dans le plan de positionnement (11) par rapport à la surface de sortie (10') de ladite au moins une autre fibre guide d'ondes optiques (9').

7. Dispositif de marquage (1) selon l'une quelconque des revendications 5 ou 6, **caractérisé en ce que** la lumière laser (6) de la même source de lumière laser (5) est couplée dans ladite au moins une fibre guide d'ondes optiques (9) et dans ladite au moins une autre fibre guide d'ondes optiques (9').

8. Dispositif de marquage (1) selon l'une quelconque des revendications précédentes, **caractérisé en ce qu'**un élément de modification (21) est couplé avec ladite au moins une fibre guide d'ondes optiques (9) ou est intégré dans cette dernière, par le biais duquel la lumière laser (6') découplée de la surface de sortie (10) peut être modifiée en ce qui concerne sa fréquence et/ou son intensité.

9. Procédé de marquage permanent d'un document de valeur ou de sécurité (2) comprennent les étapes suivantes :
génération d'une lumière laser (6) et
guidage de la lumière laser (6) au moyen d'un dispositif de guidage de lumière (8) de sorte que la lumière laser (6') sortant du dispositif de guidage de lumière (8) soit positionnée sur le document de valeur ou de sécurité (2) et que le document de valeur ou de sécurité (2) soit marqué localement au moyen de la lumière laser (6'),
la lumière laser (6) étant guidée au moyen d'une fibre guide d'ondes optiques (9) et
un positionnement de la lumière sur le document de valeur ou de sécurité (2) à marquer est effectué par un déplacement d'une surface de sortie (10) de la fibre guide d'ondes optiques (9) par rapport au document de valeur ou de sécurité (2),
**caractérisé en ce que**
la surface de sortie (10) de la fibre guide d'ondes optiques (9) est déplacée en plus de sorte qu'un trajet de la lumière entre la surface de sortie et une face supérieure du document de valeur ou de sécurité (2) soit varié et que, à la suite de cela, une position du foyer soit variée à l'intérieur du document de valeur ou de sécurité (2).

10. Procédé selon la revendication 9, **caractérisé en ce que** la surface de sortie (10) est déplacée dans un plan de positionnement au moyen dudit au moins un système d'entraînement (12) conjointement avec une optique de reproduction et/ou de focalisation (20) afin de positionner la lumière sortante latéralement sur la face supérieure du document de valeur ou de sécurité (2) et **en ce que**, en plus au moyen d'un actionneur de focalisation (33), un déplacement relatif de la surface de sortie (10) par rapport à au moins un élément de l'optique de reproduction et/ou de focalisation peut être effectué dans le plan de positionnement pour obtenir la modification de la position du foyer perpendiculairement à la face supérieure du document de valeur ou de sécurité (2).

11. Procédé selon la revendication 9, **caractérisé en ce que** la surface de sortie (10), qui est déplacée au moyen dudit au moins un système d'entraînement (12) dans le plan de positionnement afin de positionner la lumière sortante latéralement sur la face supérieure du document de valeur ou de sécurité (2), est déplacée en plus perpendiculairement au plan de positionnement ou à la face supérieure du document de valeur ou de sécurité afin de varier la position du foyer dans le document de valeur ou de sécurité (2).

12. Procédé selon l'une quelconque des revendications 9 à 11, **caractérisé en ce que** la lumière laser (6') est positionnée par le biais de plusieurs fibres guides d'ondes optiques simultanément ou quasi simultanément à différents endroits sur le document de valeur ou de sécurité (2) à marquer.

13. Procédé selon la revendication 12, **caractérisé en ce que** les surfaces de sortie (10, 10') des plusieurs fibres guides d'ondes optiques (9, 9') sont positionnées conjointement par rapport au document de valeur ou de sécurité (2) à marquer.

14. Procédé selon l'une quelconque des revendications 12 ou 13, **caractérisé en ce que** les plusieurs fibres guides d'ondes optiques (9, 9') sont positionnées individuellement par rapport au document de valeur ou de sécurité (2) à marquer.
